# EUROPÄISCHE PATENTSCHRIFT

(11) **EP 4 016 181 B1**
(45) Veröffentlichungstag und Bekanntmachung des Hinweises auf die Patenterteilung: **18.11.2026**
(21) Anmeldenummer: 20214879.7
(22) Anmeldetag: 17.12.2020
(51) Int. Cl.: G03B 3/00, G01B 11/02, G01S 17/00, G03B 3/04

(54) **OPTISCHER SENSOR**
OPTICAL SENSOR
CAPTEUR OPTIQUE

(43) Veröffentlichungstag der Anmeldung: 22.06.2022
(73) Patentinhaber: Leuze electronic GmbH + Co. KG, 73277 Owen/Teck (DE)
(72) Erfinder: Doll, Manfred, 73230 Kirchheim unter Teck (DE)
(74) Vertreter: Ruckh, Rainer Gerhard

(56) Entgegenhaltungen:
- EP-A1- 3 361 282
- WO-A1-2020/069391
- DE-U1- 202005 006 736
- DE-U1- 202006 005 876

## Beschreibung

Die Erfindung betrifft einen optischen Sensor gemäß dem Oberbegriff des Anspruchs 1.

Derartige optische Sensoren bilden Kamerasensoren, die als Empfänger einen Bildsensor in Form eines CCD- oder CMOS-Arrays aufweisen. Mit derartigen optischen Sensoren kann generell ein Raumbereich erfasst werden, um dort vorhandene Objekte zu detektieren.

Diese optische Sensoren können einerseits zu Überwachungszwecken eingesetzt werden, um festzustellen ob bestimmte, insbesondere sicherheitskritische Objekte in einen Überwachungsbereich eindringen. Bei Detektion eines solchen Objekts kann im optischen Sensor ein Objektfeststellungssignal in Form eines sicherheitsrelevanten Ausgangssignals generiert werden.

Generell können derartige optische Sensoren auch zur Objektidentifizierung eingesetzt werden.

Schließlich können die optischen Sensoren auch als Codeleser ausgebildet sein, mittels derer Codes wie Barcodes, 2D-Codes und dergleichen erfasst werden können. In diesem Fall werden mit dem optischen Sensor die entsprechenden Codes gelesen und detektiert und das Dekodierungsergebnis wird als Objektfeststellungssignal ausgegeben.

Um die entsprechenden Objekte im Erfassungsbereich sicher detektieren zu können, ist es erforderlich die Bildebene des optischen Sensors und die Abbildungsebene des Bildsensors in Deckung zu bringen, das heißt es wird insbesondere eine Fokusverstellung des optischen Sensors durchgeführt. Bei bekannten optischen Sensoren wird hierzu die Empfangsoptik relativ zum Bildsensor verstellt.

Nachteilig hierbei ist, dass die typischerweise von einem Objektiv gebildete Empfangsoptik ein hohes Eigengewicht aufweist. Zur Durchführung einer Fokusverstellung müssen daher relativ große Massen bewegt werden, was nicht nur relativ aufwändige Einstellvorrichtungen erforderlich macht, sondern auch die Dynamik der Fokusverstellung in unerwünschter Weise einschränkt.

Die DE 20 2006 005 876 U1 betrifft einen optischen Sensor zur Erfassung von Objekten in einem Überwachungsbereich mit einem Sendelichtstrahlen emittierenden Sender und einem Empfangslichtstrahlen empfangenden Empfänger bestehend aus einer zeilenförmigen Anordnung von Empfangselementen. Dem Empfänger ist eine Vorzugsrichtung aufweisende Empfangsoptik vorgeordnet, mittels derer ein länglicher Empfangslichtfleck auf dem Empfänger generiert wird, wobei die Längsachse des Empfangslichtflecks mit der Längsachse des Empfängers zusammenfällt.

Die WO 2020/069391 A1 betrifft ein Mehrzweckgerät wie ein Smartphone oder ein Tablet. Das Gerät weist eine Kamera mit einem vorgeordneten Linsensystem auf. Die Kamera kann in eine Richtung für eine Autofokusverstellung bewegt werden. Zudem kann die Kamera senkrecht hierzu bewegt werden, um eine Bildstabilisierung der Kamerabilder zu bewirken.

Die EP 3 361 282 A1 betrifft einen optischen Sensor zur Erfassung von Objekten in einem Überwachungsbereich und umfasst einen Sender, welcher Sendelichtstrahlen in Form von Sendelichtimpulsen emittiert, sowie einen Sendelichtimpulse empfangenden Empfänger. Mit einer Auswerteeinheit werden am Ausgang des Empfängers anstehende Empfangssignale zur Generierung eines Objektfeststellungssignals ausgewertet. Dem Empfänger ist eine Begrenzerschaltung nachgeordnet, welche zwei Begrenzerstufen aufweist. Eine erste Begrenzerstufe ist von einer Längsstufe gebildet, welche bei Überschreiten einer Grenzamplitude des Empfangssignals hochohmig ist. Eine zweite Begrenzerstufe ist von einer Querstufe gebildet, mittels derer bei Überschreiten einer Grenzamplitude des Empfangssignals ein Teil dieses Empfangssignals nach Masse abgeleitet ist.

Die DE 20 2005 006 736 U1 betrifft einen optischen Sensor zur Erfassung von Objekten in einem Überwachungsbereich, mit wenigstens einem Sendelichtstrahlen emittierenden Sender, wenigstens einem Empfangslichtstrahlen empfangenden Empfänger sowie einer Auswerteeinheit zur Generierung eines Objektfeststellungssignals in Abhängigkeit der am Ausgang des Empfängers anstehenden Empfangssignale. Zur Strahlführung der Sendelichtstrahlen und/oder der Empfangslichtstrahlen sind aus Kunststoff bestehende und in einem Kaltgießverfahren durch Polyreaktion hergestellte Optikelemente vorgesehen.

Der Erfindung liegt die Aufgabe zugrunde für einen optischen Sensor der eingangs genannten Art bei welchen die Abbildungseigenschaften dessen optischen Systems präzise und hochdynamisch eingestellt werden können.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Detektion von Objekten innerhalb eines Erfassungsbereichs, mit einem Empfangslichtstrahlen empfangenden Bildsensor, welchem eine Empfangsoptik vorgeordnet ist. In einer Auswerteeinheit werden in Abhängigkeit von Empfangssignalen des Bildsensors Objektfeststellungssignale generiert. Eine Verstelleinheit ist vorgesehen, mittels derer die Position des Bildsensors relativ zur Empfangsoptik entfernungsabhängig und abhängig von Abbildungseigenschaften der Empfangsoptik variierbar ist. Dabei weist der optische Sensor eine Sendelichtstrahlen emittierende Beleuchtungseinheit auf. Von den Beleuchtungseinheiten emittierte Sendelichtstrahlen werden von einem zu detektierenden Objekt als Empfangslichtstrahlen zum Bildsensor reflektiert. Die Verstelleinheit weist einen Aktor auf, wobei der Aktor elektroaktive Polymere oder eine magnetische Formgedächtnislegierung aufweist. Die Verstelleinheit weist alternativ einen Motor und eine Führungseinrichtung auf, mittels derer die Bewegung des Motors auf den Bildsensor umgesetzt wird. Die Führungseinrichtung weist eine Federführung auf, welche eine von dem Motor angetriebene Kurvenscheibe aufweist, die in Eingriff mit federnd an den Bildsensor angekoppelten Koppelelementen ist. Die Koppelelemente sind von auf der Kurvenscheibe abrollenden Rollen gebildet, wobei die Koppelelemente an einer mit dem Bildsensor verbundenen Federanordnung gelagert sind.

Die Beleuchtungseinheit kann beispielsweise von einer Anordnung von Laserdioden oder Leuchtdioden gebildet sein.

Der Grundgedanke der Erfindung besteht somit darin zur Anpassung der optischen Abbildungseigenschaften nicht die insbesondere von einem Objektiv gebildete Empfangsoptik zu verstellen, sondern den Bildsensor. Da der insbesondere von einem CCD- oder CMOS-Array gebildete Bildsensor ein erheblich geringeres Eigengewicht als die Empfangsoptik hat, muss die Verstelleinheit im Vergleich zu bekannten Systemen, bei welchen die Empfangsoptik verstellt wird, mit dem Bildsensor eine erheblich geringere Masse bewegen. Dadurch kann einerseits die Verstelleinheit einen kompakten Aufbau aufweisen. Andererseits können mit der Verstelleinheit schnelle Einstellbewegungen des Bildsensors realisiert werden, wodurch eine hochdynamische Einstellung der optischen Abbildungseigenschaften des optischen Sensors ermöglicht wird.

Besonders vorteilhaft wird mit der Verstelleinheit eine Fokusverstellung derart durchgeführt, dass das von einem detektierten Objekt stammende Empfangslicht auf die Ebene des Bildsensors detektiert wird, so dass das Objekt scharf auf dem Bildsensor abgebildet wird.

Die Fokusverstellung erfolgt dabei abhängig von der aktuellen Entfernung des Objekts zum optischen Sensor.

Gemäß einer ersten Variante der Erfindung weist der optische Sensor eine Entfernungsmesseinrichtung auf, mittels derer die Entfernung eines zu erfassenden Objekts bestimmt wird. In Abhängigkeit dieser Entfernung wird die Position des Bildsensors mittels der Verstelleinheit geändert.

Die Entfernungsmesseinrichtung kann beispielsweise von einer nach einem Impulslaufzeit- oder Phasenmessverfahren arbeitenden Distanzsensor gebildet sein.

Mit der Entfernungsmesseinrichtung können fortlaufend die Entfernungen von zu detektierenden Objekten bestimmt werden, wobei anhand der aktuellen Entfernungsmessungen die Position des Bildsensors unmittelbar nachgeführt werden kann.

Gemäß einer zweiten Variante wird die Position des Bildsensors mittels der Verstelleinheit abhängig von einem vorgegebenen Entfernungswert geändert.

Diese Variante bietet sich an, wenn beispielsweise Objekte auf Fördereinrichtungen oder dergleichen in vorgegebenen, bekannten Entfernungen in einer ebenfalls vorgegebenen zeitlichen Folge am optischen Sensor vorbei bewegt werden. Für die jeweiligen Objekte können dann die Entfernungswerte von einer externen Einheit, beispielsweise von einer Steuereinheit, in der die Entfernungswerte gespeichert sind, in den optischen Sensor eingelesen werden, so dass in diesen mit der Verstelleinheit abhängig vom jeweiligen aktuellen Entfernungswert durch Verfallen des Bildsensors mittels der Verstelleinheit eine Fokusverstellung durchgeführt werden kann.

Gemäß einer ersten Variante der Erfindung weist die Verstelleinheit einen Aktor auf.

Dabei weist der Aktor elektroaktive Polymere oder eine magnetische Formgedächtnislegierung auf.

Mit derartigen Aktoren kann mit einer geringen Anzahl von bewegten Teilen die Verstelleinheit zur Verstellung des Bildsensors realisiert werden.

Gemäß einer zweiten Variante der Erfindnung weist die Verstelleinheit einen Motor auf.

Der Aktor kann beispielsweise als Schrittmotor oder Servomotor ausgebildet sein, mittels derer exakte Positionierbewegungen durchgeführt werden können.

Die Verstelleinheit weist eine Führungseinrichtung auf, mittels derer die Bewegung des Motors auf den Bildsensor umgesetzt wird.

Mit der Führungseinrichtung wird die Drehbewegung des Motors beziehungsweise einer Motorwelle in eine Verschiebbewegung des Bildsensors umgesetzt, um insbesondere die Fokusverstellung durchzuführen.

Dabei weist die Führungseinrichtung eine Federführung auf.

Damit wird eine besonders zuverlässige und gleichzeitig konstruktiv einfache und entsprechend wartungsarme, kostengünstige Führungseinrichtung bereitgestellt. Die Federführung arbeitet nahezu verschleiß-, reibungs- und vorteilhaft auch spielfrei.

Weiterhin weist die Federführung eine von dem Motor angetriebene Kurvenscheibe auf, die in Eingriff mit federnd an den Bildsensor angekoppelten Koppelelementen ist.

Dabei sind die Koppelelemente von auf der Kurvenscheibe abrollenden Rollen gebildet.

Weiterhin sind die Koppelelemente an einer mit dem Bildsensor verbundenen Federanordnung gelagert.

Mit der Kurvenscheibe ist eine einfache Umsetzung der Motorbewegung in die Verstellbewegung des Bildsensors gegeben. Auch können durch spezifische Ausgestaltungen der Kurvenscheibe unterschiedliche Verstellcharakteristiken für den Bildsensor realisiert werden.

Der erfindungsgemäße optische Sensor kann vorteilhaft als Codeleser ausgebildet sein. Alternativ kann mit dem optischen Sensor eine Überwachung eines Überwachungsbereichs durchgeführt werden. Schließlich kann der optische Sensor zur Objektidentifikation eingesetzt werden.

Die Erfindung wird im Folgenden anhand der Zeichnungen erläutert. Es zeigen:
- Figur 1:: Schematische Darstellung eines Ausführungsbeispiels des erfindungsgemäßen optischen Sensors.
- Figur 2:: Schnittdarstellung einer Ausführungsform einer Verstelleinheit für den optischen Sensor gemäß Figur 1.
- Figur 3:: Perspektivische Darstellung der Verstelleinheit gemäß Figur 2.
- Figur 4:: Vergrößerte Teildarstellung der Anordnung gemäß Figur 3.

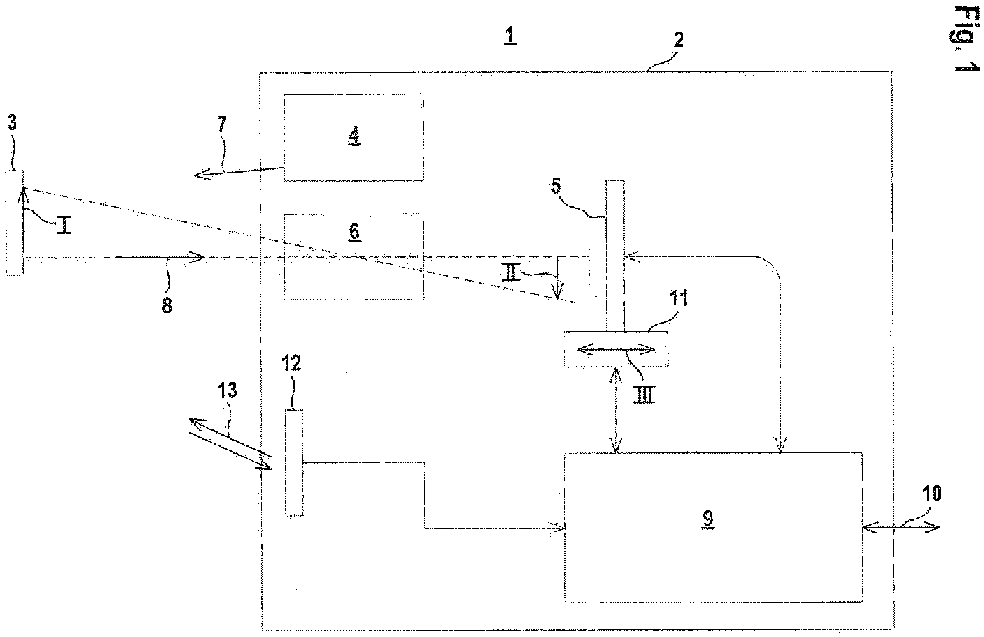

Figur 1 zeigt ein Ausführungsbeispiel des erfindungsgemäßen optischen Sensors 1. Die Komponenten des optischen Sensors 1 sind in einem Gehäuse 2 integriert. Zur Detektion von Objekten 3 in einem Erfassungsbereich weist der optische Sensor 1 eine Beleuchtungseinheit 4 auf, die vorteilhaft von einer Anordnung von Laserdioden oder Leuchtdioden gebildet sein kann.

Weiterhin weist der optische Sensor 1 als Empfänger einen Bildsensor 5 mit einer vorgeordneten Empfangsoptik 6 auf. Der Bildsensor 5 weist eine matrixförmige Anordnung von Empfangselementen auf und ist insbesondere in Form eines CCD- oder CMOS-Arrays ausgebildet. Die Empfangsoptik 6 ist von einem Objektiv gebildet.

Zur Detektion von Objekten 3 emittiert die Beleuchtungseinheit 4 Sendelichtstrahlen 7. Die an einem Objekt 3 reflektierten Sendelichtstrahlen 7 werden als Empfangslichtstrahlen 8 über die Empfangsoptik 6 zum Bildsensor 5 reflektiert.

Die Auswertung der Empfangssignale des Bildsensors 5 erfolgt in einer Sende- und Auswerteeinheit 9, das heißt diese bildet eine Auswerteeinheit derart, dass abhängig von den Empfangssignalen des Bildsensors ein Objektfeststellungssignal generiert wird, das über eine geeignete Schnittstelle 10 ausgegeben wird. Die Sende- und Auswerteeinheit 9 dient weiterhin zur Steuerung der elektronischen beziehungsweise optoelektronischen Komponenten des optischen Sensors 1.

Der optische Sensor 1 kann zur Überwachung eines Überwachungsbereichs eingesetzt werden. Dann ist das Objektfeststellungssignal als binäres Schaltsignal ausgebildet, dessen Schaltzustände signalisieren, ob ein definiertes, insbesondere sicherheitskritisches Objekt 3 im Überwachungsbereich vorhanden ist oder nicht. Weiterhin kann der optische Sensor 1 zur Objektidentifikation eingesetzt werden. Schließlich kann der optische Sensor 1 als Codeleser ausgebildet sein. Dann werden mit dem optischen Sensor 1 auf Objekten 3 aufgebrachte Codes, wie zum Beispiel Barcodes oder 2D-Codes detektiert und in der Sende- und Auswerteeinheit 9 dekodiert.

Um die Bildebene des optischen Systems mit der bildgebenden Ebene des Bildsensors 5 in Deckung zu bringen, das heißt um eine scharfe Abbildung des Objekts 3 auf der Ebene des Bildsensors 5 zu erhalten (veranschaulicht durch die Pfeile I, II in Figur 1) ist erfindungsgemäß eine von der Sende- und Auswerteeinheit 9 gesteuerte Verstelleinheit 11 vorgesehen, die die Position des Bildsensors 5 relativ zur Empfangsoptik 6 einstellt.

Diese Einstellung, die insbesondere eine Fokusverstellung der Empfangslichtstrahlen bewirkt, erfolgt abhängig vom aktuellen Abstand des detektierten Objekts 3 zum optischen Sensor 1.

Prinzipiell kann der jeweilige Entfernungswert als vorgegebene Größe in den optischen Sensor 1 eingelesen werden. Beispielsweise kann hierzu der jeweilige Entfernungswert in einer externen, nicht dargestellten Steuereinheit abgespeichert sein.

Im vorliegenden Fall sind die aktuelle Objektdistanz mittels eine Entfernungsmesseinrichtung fortlaufend bestimmt. Die Entfernungsmesseinrichtung ist im vorliegenden Fall in Form eines optischen Distanzsensors 12 ausgebildet, der nach einem Impulslaufzeitverfahren arbeitet, das heißt der Distanzsensor emittiert Lichtimpulse 13, dessen Laufzeit zum Objekt 3 und zurück zum optischen Sensor 1 ausgewertet wird.

Die Verstelleinheit 11 kann prinzipiell einen Aktor zur Verschiebung des Bildsensors 5 aufweisen, wobei insbesondere der Aktor elektroaktive Polymere oder eine magnetische Formgedächtnislegierung aufweist.

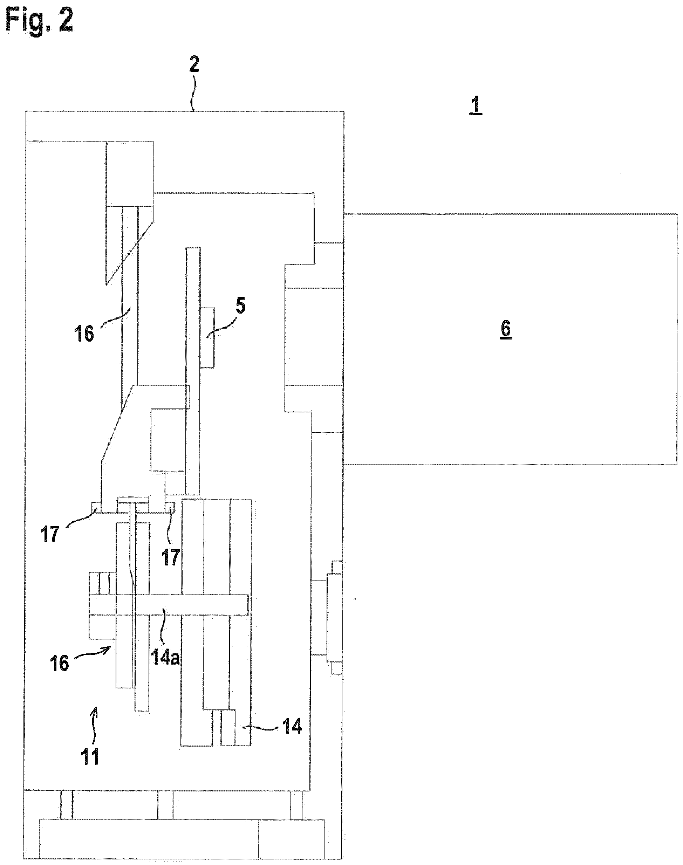

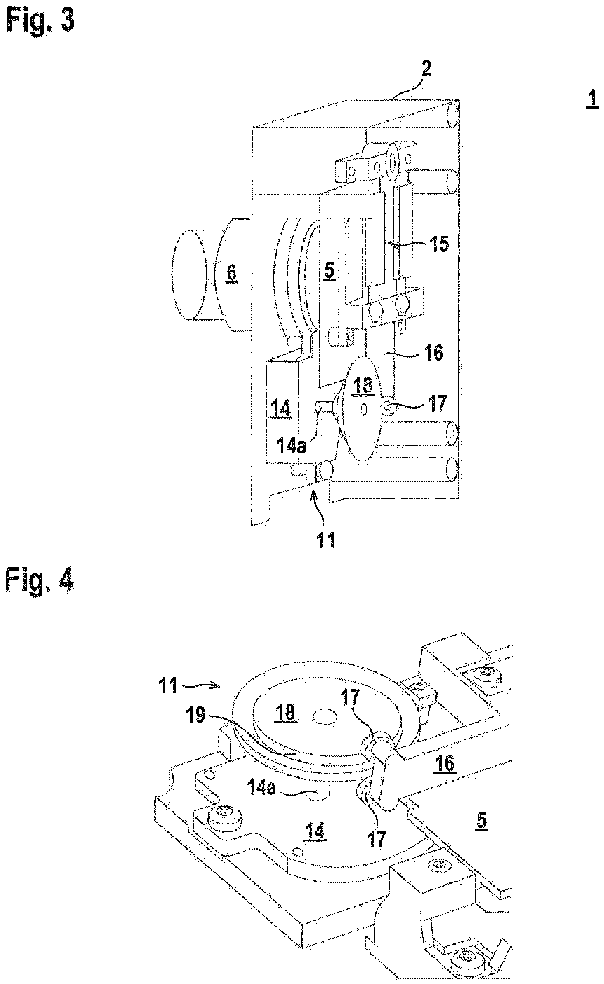

Im vorliegenden Fall ist eine motorische Verstelleinheit 11 vorgesehen (Figuren 2 - 4), das heißt die Verstelleinheit 11 weist einen Motor 14 auf, der beispielsweise als Schrittmotor oder Servomotor ausgebildet ist.

Die Drehbewegung des Motors 14 beziehungsweise der Motorwelle 14a wird mittels einer Führungseinrichtung in eine Verschiebbewegung des Bildsensors 5 (in Figur 1 mit dem Doppelpfeil III in Figur 1 gekennzeichnet) umgesetzt.

Die Komponenten der Verstelleinheit 11 mit dem Motor 14 und der Führungseinrichtung sind in den Figuren 2 - 4 dargestellt.

Wie aus den Figuren 2 - 4 ersichtlich, ist der Bildsensor 5 mit einer Mehrpunktauflage an einem Träger 15 befestigt. Der Träger 15 weist einen federnden Federarm 16 auf, an dessen freien Ende Koppelelemente 17 in Form von Rollen drehbar gelagert sind.

Die Koppelelemente 17 sind in Eingriff mit einer Kurvenscheibe 18, die vom Motor 14 angetrieben wird.

Die Kurvenscheibe 18 weist in bekannter Weise einen Exzenter auf, an welchen die die Koppelelemente 17 bildenden Rollen zwangsgeführt sind. Je nach Position der Rollen am Exzenter der Kurvenscheibe 18 ergibt sich eine bestimmte Auslenkung des Federraums und dadurch eine bestimmte Auslenkung des Bildsensors 5.

Durch die Ansteuerung des Motors 14 mittels der Sende- und Auswerteeinheit 9 kann so die Position des Bildsensors 5 relativ zur Eingangsoptik exakt vorgegeben werden.

Vorteilhaft ist der Exzenter derart ausgeführt, dass nicht dessen gesamter Umfang genutzt wird. Dieser wird gekürzt, um bei gleicher Drehrichtung vom Ende wieder auf die Anfangsposition der Kurvenscheibe 18 über eine Rampe weitergefahren werden kann. Dies ermöglicht bei gleicher Drehrichtung hysteresefrei zu positionieren.

### Bezugszeichenliste

- (1): Optischer Sensor
- (2): Gehäuse
- (3): Objekt
- (4): Beleuchtungseinheit
- (5): Bildsensor
- (6): Empfangsoptik
- (7): Sendelichtstrahlen
- (8): Empfangslichtstrahlen
- (9): Sende- und Auswerteeinheit
- (10): Schnittstelle
- (11): Verstelleinheit
- (12): Distanzmesser
- (13): Lichtimpuls
- (14): Motor
- (14a): Motorwelle
- (15): Träger
- (16): Federarm
- (17): Koppelelement
- (18): Kurvenscheibe
- (19): Rampe

## Patentansprüche

1. Optischer Sensor (1) zur Detektion von Objekten (3) innerhalb eines Erfassungsbereichs, mit einem Empfangslichtstrahlen empfangenden Bildsensor (5), welchem eine Empfangsoptik (6) vorgeordnet ist, wobei in einer Auswerteeinheit in Abhängigkeit von Empfangssignalen des Bildsensors (5) Objektfeststellungssignale generiert werden, **dadurch gekennzeichnet, dass** eine Verstelleinheit (11) vorgesehen ist, mittels derer die Position des Bildsensors (5) relativ zur Empfangsoptik (6) entfernungsabhängig und abhängig von Abbildungseigenschaften der Empfangsoptik (6) variierbar ist, und dass der optische Sensor (1) eine Sendelichtstrahlen (7) emittierende Beleuchtungseinheit (4) aufweist, wobei von der Beleuchtungseinheit (4) emittierte Sendelichtstrahlen (7) von einem zu detektierenden Objekt (3) als Empfangslichtstrahlen zum Bildsensor (5) reflektiert werden, und dass die Verstelleinheit (11) einen Aktor aufweist, wobei der Aktor elektroaktive Polymere oder eine magnetische Formgedächtnislegierung aufweist oder dass die Verstelleinheit (11) einen Motor (14) und eine Führungseinrichtung aufweist, mittels derer die Bewegung des Motors (14) auf den Bildsensor (5) umgesetzt wird, wobei die Führungseinrichtung eine Federführung aufweist, welche eine von dem Motor angetriebene Kurvenscheibe (18) aufweist, die in Eingriff mit federnd an den Bildsensor (5) angekoppelten Koppelelementen (17) ist, wobei die Koppelelemente (17) von auf der Kurvenscheibe (18) abrollenden Rollen gebildet sind, wobei die Koppelelemente (17) an einer mit dem Bildsensor (5) verbundenen Federanordnung gelagert sind.

2. Optischer Sensor (1) nach Anspruch 1, **dadurch gekennzeichnet, dass** mit der Verstelleinheit (11) eine Fokusverstellung durchgeführt wird.

3. Optischer Sensor (1) nach einem der Ansprüche 1 oder 2, **dadurch gekennzeichnet, dass** dieser eine Entfernungsmesseinrichtung aufweist, mittels derer die Entfernung eines zu erfassenden Objekts (3) bestimmt wird, und dass in Abhängigkeit dieser Entfernung die Position des Bildsensors (5) mittels der Verstelleinheit (11) geändert wird.

4. Optischer Sensor (1) nach einem der Ansprüche 1 oder 2, **dadurch gekennzeichnet, dass** die Position des Bildsensors (5) mittels der Verstelleinheit (11) abhängig von einem vorgegebenen Entfernungswert geändert wird.

5. Optischer Sensor (1) nach Anspruch 4, **dadurch gekennzeichnet, dass** der Entfernungswert in einer Steuereinheit gespeichert ist.

6. Optischer Sensor (1) nach einem der Ansprüche 1 bis 5, **dadurch gekennzeichnet, dass** der Bildsensor (5) in Form eines CCD- oder CMOS-Arrays und die Empfangsoptik (6) in Form eines Objektivs ausgebildet sind.

7. Optischer Sensor (1) nach einem der Ansprüche 1 bis 6, **dadurch gekennzeichnet, dass** dieser als Codeleser ausgebildet ist.

## Claims

1. An optical sensor (1) for detecting objects (3) within a detection range, comprising an image sensor (5) which receives incoming light beams and is preceded by a receiving optical system (6), wherein an evaluation unit generates object detection signals in response to received signals from the image sensor (5), **characterised in that** an adjustment unit (11) is provided, by means of which the position of the image sensor (5) relative to the receiving optics (6) can be varied as a function of distance and depending on the imaging characteristics of the receiving optics (6), and that the optical sensor (1) comprises an illumination unit (4) emitting transmitted light beams (7), wherein transmitted light beams (7) emitted by the illumination unit (4) are reflected by an object (3) to be detected as received light beams towards the image sensor (5), and that the adjustment unit (11) comprises an actuator, wherein the actuator comprises electroactive polymers or a magnetic shape-memory alloy, or that the adjustment unit (11) comprises a motor (14) and a guide mechanism by means of which the movement of the motor (14) is transmitted to the image sensor (5), wherein the guide mechanism comprises a spring guide which includes a cam disc (18) driven by the motor, which is in engagement with coupling elements (17) spring-mounted to the image sensor (5), wherein the coupling elements (17) are formed by rollers rolling over the cam disc (18), and wherein the coupling elements (17) are mounted on a spring assembly connected to the image sensor (5).

2. An optical sensor (1) according to claim 1, **characterised in that** a focus adjustment is carried out by means of the adjustment unit (11).

3. An optical sensor (1) according to one of claims 1 or 2, **characterised in that** it comprises a distance-measuring device by means of which the distance to an object (3) to be detected is determined, and **in that**, depending on this distance, the position of the image sensor (5) is altered by means of the adjustment unit (11).

4. An optical sensor (1) according to one of claims 1 or 2, **characterised in that** the position of the image sensor (5) is adjusted by means of the adjustment unit (11) as a function of a predetermined distance value.

5. An optical sensor (1) according to claim 4, **characterised in that** the distance value is stored in a control unit.

6. An optical sensor (1) according to any one of claims 1 to 5, **characterised in that** the image sensor (5) is in the form of a CCD or CMOS array and the receiving optics (6) are in the form of a lens.

7. An optical sensor (1) according to any one of claims 1 to 6, **characterised in that** it is designed as a code reader.

## Revendications

1. Capteur optique (1) destiné à la détection d'objets (3) à l'intérieur d'une zone de détection, comprenant un capteur d'image (5) recevant des faisceaux lumineux, en amont duquel est disposé un système optique de réception (6), dans lequel, au sein d'une unité d'évaluation, en fonction des signaux de réception du capteur d'image (5), **caractérisé en ce qu'**il est prévu une unité de réglage (11) au moyen de laquelle la position du capteur d'image (5) par rapport à l'optique de réception (6) peut être modifiée en fonction de la distance et des propriétés de reproduction de l'optique de réception (6), et **en ce que** le capteur optique (1) comporte une unité d'éclairage (4) émettant des faisceaux lumineux d'émission (7), les faisceaux lumineux d'émission (7) émis par l'unité d'éclairage (4) étant réfléchis par un objet (3) à détecter sous forme de faisceaux lumineux de réception vers le capteur d'image (5), et que l'unité de réglage (11) comporte un actionneur, ledit actionneur comprenant des polymères électroactifs ou un alliage à mémoire de forme magnétique, ou bien que l'unité de réglage (11) comporte un moteur (14) et un dispositif de guidage, au moyen duquel le mouvement du moteur (14) est transmis au capteur d'image (5), le dispositif de guidage comportant un guidage à ressort qui comprend une came (18) entraînée par le moteur, laquelle est en prise avec des éléments de couplage (17) reliés de manière élastique au capteur d'image (5) de manière élastique, les éléments de couplage (17) étant formés par des galets roulant sur la came (18), les éléments de couplage (17) étant montés sur un ensemble à ressort relié au capteur d'image (5).

2. Capteur optique (1) selon la revendication 1, **caractérisé en ce qu'**un réglage de la mise au point est effectué à l'aide de l'unité de réglage (11).

3. Capteur optique (1) selon l'une des revendications 1 ou 2, **caractérisé en ce qu'**il comporte un dispositif de mesure de distance au moyen duquel la distance d'un objet (3) à détecter est déterminée, et **en ce que**, en fonction de cette distance, la position d' du capteur d'image (5) est modifiée au moyen de l'unité de réglage (11).

4. Capteur optique (1) selon l'une des revendications 1 ou 2, **caractérisé en ce que** la position du capteur d'image (5) est modifiée au moyen de l'unité de réglage (11) en fonction d'une valeur de distance prédéfinie.

5. Capteur optique (1) selon la revendication 4, **caractérisé en ce que** la valeur de distance est mémorisée dans une unité de commande.

6. Capteur optique (1) selon l'une des revendications 1 à 5, **caractérisé en ce que** le capteur d'image (5) se présente sous la forme d'un réseau CCD ou CMOS et que l'optique de réception (6) se présente sous la forme d'un objectif.

7. Capteur optique (1) selon l'une des revendications 1 à 6, **caractérisé en ce qu'**il est conçu comme un lecteur de codes.
